Europäisches Patentamt

European Patent Office

Office européen des brevets

(19)

(11) Numéro de publication: **0 270 434**
**B1**

(12) **FASCICULE DE BREVET EUROPEEN**

(45) Date de publication du fascicule du brevet: **30.01.91**

(51) Int. Cl.⁵: **G 01 V 3/15**

(21) Numéro de dépôt: **87402573.7**

(22) Date de dépôt: **16.11.87**

(54) **Dispositif pour la mesure des champs magnétiques.**

(30) Priorité: **18.11.86 FR 8616130**

(43) Date de publication de la demande:
**08.06.88 Bulletin 88/23**

(45) Mention de la délivrance du brevet:
**30.01.91 Bulletin 91/05**

(84) Etats contractants désignés:
**DE FR GB IT**

(56) Documents cités:
**FR-A-2 060 261**

**PATENT ABSTRACTS OF JAPAN, vol. 5, no. 201 (P-94)873r, 19 décembre 1981; & JP-A-56 122 978 (SHIMAZU SEISAKUSHO K.K.) 26-09-1981**

(73) Titulaire: **SEXTANT Avionique**
**5/7 rue Jeanne Braconnier Parc Tertiaire**
**F-92368 Meudon la Forêt Cedex (FR)**

(72) Inventeur: **Oury, Robert**
**7 rue de Vassieux**
**F-26000 Valence (FR)**

(74) Mandataire: **Bloch, Gérard et al**
**2, square de l'Avenue du Bois**
**F-75116 Paris (FR)**

Courier Press, Leamington Spa, England.

**Description**

La présente invention concerne un dispositif pour la mesure du champ magnétique terrestre perturbé par des anomalies. Plus particulièrement, elle concerne un dispositif pour la mesure du champ magnétique terrestre et des anomalies de celui-ci, à partir d'un véhicule porteur terrestre, naval ou aérien, dispositif comportant un oscillateur nucléaire, formé d'une sonde à résonance magnétique nucléaire associée à un amplificateur de boucle, et des organes de compensation montés sur un même bâti de telle sorte que leurs trièdres de référence aient leurs axes respectivement parallèles.

Certains dispositifs existent déjà pour la mesure du champ magnétique terrestre et de ses anomalies.

Le document FR-A-2 060 261 enseigne un dispositif du type défini ci-dessus, dans lequel deux sondes magnétométriques sont montées au bout d'un mât. Outre le fait qu'il n'est utilisable que pour des hélicoptères monorotor, ce dispositif impose que le mât soit monté dans l'alignement de l'arbre du rotor ce qui entraîne des contraintes opérationnelles.

Selon d'autres dispositifs, une seule sonde magnétométrique est utilisée en coopération avec des organes de compensation des perturbations du champ magnétique à mesurer engendrées par le véhicule porteur. La sonde magnétométrique est éloignée au maximum du véhicule porteur soit au bout d'un mât fixé au véhicule porteur, les organes de compensation étant, eux, intégrés au véhicule porteur, soit, et pour le cas d'aéronefs, tractée en remorque au bout d'un cable.

Si ces derniers dispositifs sont utilisables sur différents types de véhicules porteurs, les modifications d'attitudes du véhicule porteur, c'est-à-dire les changements d'orientations du véhicule dans le champ magnétique à mesurer, ainsi que la vitesse de ces changements, entraînent cependant des perturbations de la mesure.

La détermination de ce champ perturbateur variable, engendré par le véhicule porteur, est obtenue par un magnétomètre triaxial qui indique l'attitude du véhicule porteur dans le champ magnétique terrestre et par un bloc gyrométrique à deux axes qui indique la vitesse des changements d'attitude du véhicule porteur suivant deux axes orthogonaux. Le calcul de la compensation, à l'aide des informations délivrées par les organes de compensation précités, nécessite une harmonisation préalable de la sonde magnétométrique, du magnétomètre et du bloc gyrométrique, c'est-à-dire la mise en parallèle des trièdres de référence de ces trois capteurs.

Cette opération est longue, délicate, coûteuse et contraignante sur le plan opérationnel. Par ailleurs le dispositif de mesure de champ magnétique utilisant une sonde tractée au bout d'un cable nécessite la présence d'un treuil à bord de l'aéronef et requiert des manoeuvres spécifiques au décolage comme à l'attérissage qui sont, elles aussi, fort contraignantes sur le plan opérationnel.

La présente invention vise à supprimer ces inconvénients. A cet effet, la présente invention concerne un dispositif de mesure du champ magnétique terrestre perturbé par des anomalies, du type défini ci-dessus, caractérisé par le fait que les organes de compensation comprennent un magnétomètre statique à trois axes et un bloc gyrométrique à deux axes.

L'invention sera mieux comprise à l'aide de la description suivante de la forme de réalisation préférée du dispositif de l'invention, en référence aux dessins annexés, sur lesquels

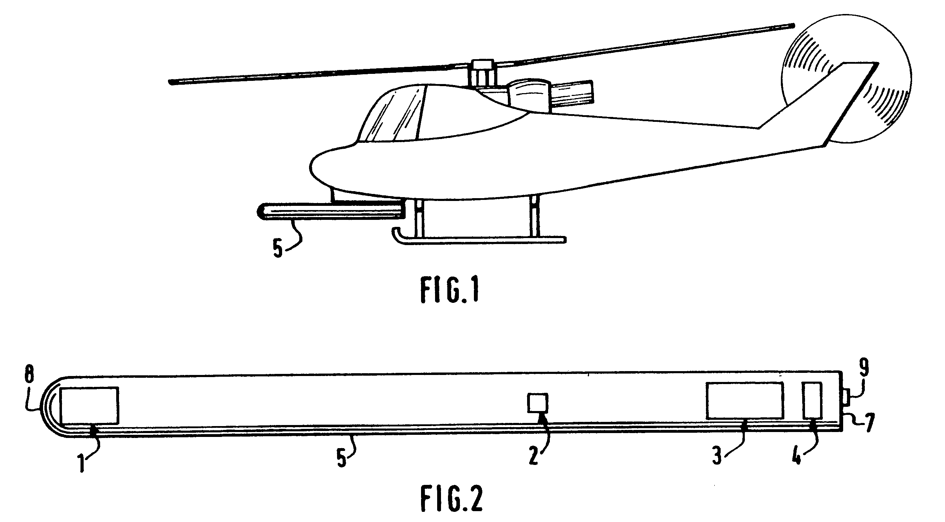

la figure 1 représente le dispositif monté sur un hélicoptère, la figure 2 représente une vue schématique du dispositif.

Le dispositif représenté sur les dessins est destiné à un aéronef. Il comporte une perche tubulaire 5 fermée, à l'une de ses extrémités, par un fond plat 7 supportant en son centre un connecteur électrique 9, et, à l'autre extrémité, par un dôme hémisphérique 8.

La perche et ses éléments d'obturation sont réalisés en un matériau rigide, à magnétique, et de préférence non conducteur, ici, de la résine époxy chargée de fibres de verre.

Cette perche 5 est reliée au porteur, l'aéronef, de manière à ce que son axe soit sensiblement parallèle à l'axe longitudinal du porteur. Comme moyen de fixation, on peut envisager un dispositif support propre au porteur lui-même et pouvant garantir une bonne rigidité mécanique, par exemple une nacelle ou un berceau, la fixation de la perche 5 sur le dispositif support étant réalisée par des brides positionnées dans une zone dite de fixation constituée sensiblement et ici par le premier tiers de la perche 5 depuis le fond plat 7.

On notera que le montage sur le porteur pourrait aussi se faire en traversée de paroi, le premier tiers de la perche étant logée à l'intérieur du porteur.

A l'intérieur de la perche 5 sont montés une sonde à résonance magnétique nucléaire (RMN) 1, un boitier électronique 3 contenant un amplificateur de boucle, l'ensemble des deux étant associés pour former un oscillateur nucléaire, du type, par exemple, décrit dans le brevet français 1 352 587, et fournissant un signal sinusoïdal de fréquence proportionnelle au module du champ magnétique régnant dans le milieu dans lequel la sonde RMN 1 est placée.

Un magnétomètre statique à trois axes 2 du type "vanne de flux" ou "flux gate" est également disposé à l'intérieur de la perche 5. Pour chacun de ses trois axes orthogonaux et liés rigidement au boîtier, le magnétomètre comporte une bobine avec un noyau en matériau ferromagnétique, couplée à un oscillateur et à un asservissement, et qui délivre une tension proportionnelle au champ magnétique selon l'axe considéré.

Un bloc gyrométrique 4 à deux axes de référence, du type mécanique, est encore placé à l'intérieur de la perche 5. Il délivre une tension proportionnelle à la vitesse de rotation de chacun de ses deux axes de référence.

La sonde RMN 1 destinée à la mesure du champ magnétique terrestre a une très grande sensibilité -ici de l'ordre de 1.10$^{-11}$ Tesla- Elle doit être protégée au maximum du champ perturbateur créé par le véhicule porteur et doit donc en être éloignée au maximum. Pour cette raison, elle est logée, par l'intermédiaire d'une suspension élastique, par exemple un matériau élastique, dans l'extrémité de la perche proche du dôme 8 et dans son axe.

Les autres éléments du dispositif de l'invention, le magnétomètre triaxial 2, l'amplificateur de boucle 3 et le bloc gyrométrique 4 sont disposés dans la perche 5 en tenant compte, d'une part, de leur sensibilité aux champs magnétiques et, d'autre part, du fait qu'ils peuvent se perturber mutuellement sur le plan magnétique.

C'est ainsi que:

1) la sonde RMN 1 est perturbée par l'amplificateur de boucle 3, le magnétomètre 2 et le bloc gyrométrique 4,

2) le magnétomètre 2 est perturbé par la sonde RMN 1, l'amplificateur de boucle 3 et le bloc gyrométrique 4,

3) seuls l'amplificateur de boucle 3 et le bloc gyrométrique 4, insensibles aux champs magnétiques, ne sont pas perturbés par les autres éléments.

A cet effet, le bloc gyrométrique 4 est monté à l'extrémité de la perche 5 opposée à celle de la sonde RMN 1, c'est-à-dire à l'extrémité proche du fond plat 7 ou du porteur, l'amplificateur de boucle 3 est monté pratiquement contre le bloc gyrométrique 4 dans l'axe de la perche 5 vers son extrémité 7, et le magnétomètre 2 est également monté dans l'axe de la perche 5 et dans une zone s'étendant sensiblement de part et d'autre de la partie médiane de la perche 5. Dans cette position, compte tenu de sa sensibilité relativement faible, -ici de l'ordre de 5.10$^{-8}$ Tesla-, ce magnétomètre 2 sera peu perturbé par le porteur. L'amplificateur de boucle 3 est relié à la perche 5 par l'intermédiaire d'une suspension élastique, le magnétomètre 2 et le bloc gyrométrique 4 sont fixés rigidement à la perche 5 par tout moyen connu approprié.

L'exploitation par calcul des données fournies par la sonde RMN 1, le magnétomètre 2 et le bloc gyrométrique 4 nécessitent que ces éléments soient harmonisés entre eux, c'est-à-dire que leurs axes de référence soient parallèles. Ici, et en prenant l'axe de la sonde RMN 1 pour référence, qui est sensiblement coaxial à la perche 5, le magnétomètre 2 est monté de telle manière que l'un de ses axes soit confondu avec celui de la sonde RMN 1 et les deux autres axes orthogonaux à l'axe de la sonde, l'un dans le plan vertical, l'autre dans le plan horizontal. Le bloc gyrométrique 4 est monté de telle manière que l'un de ses axes soient également confondu avec celui de la sonde RMN 1 et l'autre orthogonal à ce dernier dans le plan horizontal.

L'alignement de ces différents axes, ici à ± 0,5° près, peut ainsi être réalisé par construction et l'ensemble du dispositif forme un équipement de mesure adaptable à des porteurs présentant des niveaux de magnétisme différents et ne nécessitant aucune opération d'alignement avec les éléments dudit porteur.

Ce même dispositif associé de façon rigide à des éléments créant expérimentalement une perturbation magnétique permet de simuler au sol les perturbations magnétiques réelles présentées par un porteur et donc de tester la validité de la fonction de compensation des perturbations magnétiques engendrées par un porteur et par ses changements d'attitude dans le champ magnétique terrestre.

## Revendications

1. Dispositif de mesure du champ magnétique terrestre perturbé par des anomalies, comportant un oscillateur nucléaire, formé d'une sonde (1) à résonance magnétique nucléaire associée à un amplificateur de boucle (3), et des organes de compensation (2, 4) monté sur un même bâti (5) de telle sorte que leurs trièdres de référence aient leurs axes respectivement parallèles, caractérisé par le fait que les organes de compensation comprennent un magnétomètre statique à trois axes (2) et un bloc gyrométrique à deux axes (4).

2. Dispositif selon la revendication 1, dans lequel le porteur a un axe longitudinal, la sonde magnétométrique (1), l'amplificateur de boucle (3), le magnétomètre (2) et le bloc gyrométrique (4) sont montés dans une perche cylindrique s'étendant sensiblement selon l'axe longitudinal du porteur avec la sonde magnétométrique (1) en bout de perche, l'amplificateur de boucle (3) et le bloc-gyrométrique (4) au bout opposé de la perche, et le magnétomètre en zone sensiblement médiane.

3. Dispositif selon la revendication 2, dans lequel l'extrémité de la perche (5) qui contient la sonde magnétométrique (1) est la plus éloignée du véhicule porteur.

## Patentansprüche

1. Vorrichtung zur Messung des durch Anomalien gestörten Erdmagnetfeldes, die einen durch eine auf dem Prinzip der Kernspinresonanz basierende, einem Schleifenverstärker (3) zugeordnete Sonde (1) gebildeten Nuklear-Oszillator und Mitteln zur Kompensation (2, 4) umfasst, die auf einem einzigen Gestell (5) derart angeordnet sind, daß die Achsen ihrer Bezugsachsenkreuze zueinander jeweils parallel sind, dadurch gekennzeichnet, daß die Mitteln zur Kompensation ein dreiachsiges, statisches Magnetometer (2) und einen zweiachsigen Gyrometer-Block (4) enthalten.

2. Vorrichtung nach Anspruch 1, bei welcher der Träger eine Längsachse aufweist, die magnetometrische Sonde (1), der Schleifenverstärker (3), das Magnetometer (2) und der Gyrometer-Block (4) in einem zylindrischen Stab angeordnet sind, der sich etwa in Richtung der Längsachse des Trägers erdtreckt, und wobei die magnetometrische Sonde (1) an einem Ende des Stabes, der Schleifenverstärker (3) und der Gyrometer-Block (4) am gegenüberliegenden Ende des Stabes und das Magnetometer in einer etwa mittigen Stabzone angeordnet sind.

3. Vorrichtung nach Anspruch 2, bei welcher das Ende des Stabes (5), welches die magnetometrische Sonde (1) enthält, vom Trägerfahrzeug am weitesten entfernt ist.

**Claims**

1. Device for measuring the earth's magnetic field disturbed by anomalies, comprising a nuclear oscillator, constituted of a nuclear magnetic resonance probe (1) coupled to a loop amplifier (3), and compensation means (2, 4) mounted on a single frame (5) so that their reference trihedrons have their axes respectively parallel, characterized in that said compensation means includes a static triaxial magnetometer (2) and a two axis gyrometric block (4).

2. Device according to claim 1, wherein the carrier has a longitudinal axis, the magnetometric probe (1), the loop amplifier (3), the magnetometer (2) and the gyrometric block (4) are mounted in a cylindrical pole extending substantially along the longitudinal axis of the carrier with the magnetometric probe (1) at the end of the pole, the loop amplifier (3) and the gyrometric block (4) at the opposite end of the pole, and the magnetometer in a substantially middle zone.

3. Device according to claim 2, wherein the end of the pole (5) which contains the magnetometric probe (1) is the furthest away from the carrier vehicle.

FIG.1

FIG.2